# EUROPEAN PATENT APPLICATION

(11) **EP 4 847 993 A1**
(43) Date of publication of application: **02.12.2026**
(21) Application number: 26161100.8
(22) Date of filing: 26.02.2026
(51) Int. Cl.: G02F 1/355, G02B 6/02, G02F 1/365

(54) **OCTAVE-SPANNING SINGLE MODE WAVEGUIDE FOR NON-LINEAR OPTICS**

(30) Priority: 27.05.2025 US 202519219372
(71) Applicant: The Boeing Company, Arlington, VA 22202 (US)
(72) Inventor: MOHAGEG, Makan, Arlington, 22202 (US)
(74) Representative: Bryn-Jacobsen, Caelia

(57) **Abstract**

In some implementations, an optical waveguide includes a single mode optical fiber. The single mode optical fiber may include a core having a core material with a position-dependent refractive index, wherein the core material is disposed such that a crystalline direction of the core material alternates along an optical path of the single mode optical fiber and such that the position-dependent refractive index has a gradient orthogonal to the optical path of the single mode optical fiber, wherein the single mode optical fiber is single mode across at least one optical octave. The single mode optical fiber may include a cladding having a different refractive index than the core material.

## Description

### FIELD

The present disclosure relates generally to optical devices and to an octave-spanning single mode waveguide for non-linear optics.

### BACKGROUND

Spontaneous parametric down-conversion (SPDC) is a nonlinear optical process in which a high-energy photon interacts with an optic, such as a nonlinear crystal or a set of quantum dots, and splits into two lower-energy photons, known as signal and idler photons. The generated photon pairs exhibit quantum correlations, often manifesting as entanglement in polarization, momentum, or time-energy degrees of freedom. SPDC may have uses in quantum optics, such as for quantum cryptography, quantum computing, quantum sensing, or quantum communication, among other examples.

### SUMMARY

An example of the present disclosure provides an optical waveguide, comprising: a single mode optical fiber, comprising: a core having a core material with a position-dependent refractive index, wherein the core material is disposed such that a crystalline direction of the core material alternates along an optical path of the single mode optical fiber and such that the position-dependent refractive index has a gradient orthogonal to the optical path of the single mode optical fiber, wherein the single mode optical fiber is single mode across at least one optical octave, and a cladding having a different refractive index than the core material.

Another example of the present disclosure provides a method, comprising: depositing, by a device, a layer of lithium niobate material on an insulator substrate, to form an optical core of an optical waveguide; forming, by the device, a refractive index gradient, such that a refractive index of the layer of lithium niobate material is position-dependent along a first axis of the lithium niobate material, wherein the first axis is orthogonal to an optical path formed by the lithium niobate material; and cladding the layer of lithium niobate material in a cladding material, wherein the optical core of the optical waveguide, when cladded, is single mode across at least one optical octave.

Yet a further example of the present disclosure provides an optical system, comprising: a non-linear optic to receive an input beam with a pump wavelength and emit an output beam with a set of photons at a signal/idler wavelength and with a remaining beam portion at the pump wavelength, wherein the signal/idler wavelength is twice the pump wavelength; and at least one single mode optical fiber, comprising: a core having a core material with a position-dependent refractive index, wherein the core material is disposed such that a crystalline direction of the core material alternates along an optical path of the single mode optical fiber and such that the position-dependent refractive index has a gradient orthogonal to the optical path of the single mode optical fiber, and wherein the at least one single mode optical fiber maintains a single mode characteristic at the pump wavelength and the signal/idler wavelength.

The features, functions, and advantages described herein can be achieved independently in various implementations or can be combined in other implementations, further details of which are shown in the drawings and described below.

### BRIEF DESCRIPTION OF THE DRAWINGS

Fig. 1 is a diagram of an example implementation associated with an octave-spanning single mode waveguide for non-linear optics.
Figs. 2A-2D are diagrams of example implementations associated with an octave-spanning single mode waveguide for non-linear optics.
Fig. 3 is a flowchart of an example process associated with manufacturing an octave-spanning single mode waveguide for non-linear optics.

### DETAILED DESCRIPTION

The following detailed description of example implementations refers to the accompanying drawings. The same reference numbers in different drawings identify the same or similar elements.

An optical element, such as a nonlinear crystal or a set of quantum dots, can be used to produce pairs of photons from a photon beam. For example, an optical emitter may emit a pump input photon that is directed toward the optical element, which may produce a pair of quantum-entangled output photons from the input photon using spontaneous parametric down-conversion (SPDC). The pair of output photons may be referred to as a signal photon and an idler photon.

SPDC can be performed in a crystalline waveguide, which may improve an efficiency of the conversion process relative to other optical elements. Such a waveguide may be single mode at a signal/idler wavelength, which may improve a stability or efficiency of an optical output from the waveguide, help control signal propagation, reduce signal distortion, or otherwise optimize performance of an optical system that includes the waveguide. When a waveguide is not single mode, in order to generate usable entanglement photons, a filter may be provided to suppress secondary or tertiary modes, among other examples. However, although a waveguide can be single mode at the signal/idler wavelength, the waveguide may be multi-mode at the pump wavelength.

Some implementations described herein provide for an octave-spanning single mode waveguide. For example, a waveguide may be provided that is single mode at both a first wavelength (e.g., the pump wavelength) and a second wavelength (e.g., the signal/idler wavelength) that is twice the first wavelength, thereby spanning at least one optical octave. In some implementations, the waveguide may achieve the octave-spanning single mode characteristic by having a height-dependent refractive index profile that is achieved using one or more techniques. For example, the waveguide may include an etched structure on a lithium-niobate core material, which is polished to achieve a curvature that results in a height-dependent refractive index profile. In some implementations, the waveguide may include an etched structure on a lithium-niobate core material, which is bonded to a curved surface to stress the lithium-niobate core material to a curved shape that results in a height-dependent refractive index profile. In some implementations, the waveguide may include a lithium-niobate core material that is formed using reverse proton exchange or titanium diffusion to cause a refractive index gradient in a non-curved structure that has a height-dependent refractive index profile. In this way, the waveguide may improve SPDC efficiency and a usability of entangled photons generated therefrom. Additionally, or alternatively, the waveguide may improve secondary harmonic generation for some use cases, such as light detection and ranging (LIDAR). Additionally, or alternatively, the waveguide may improve optical systems that use squeezed light sources.

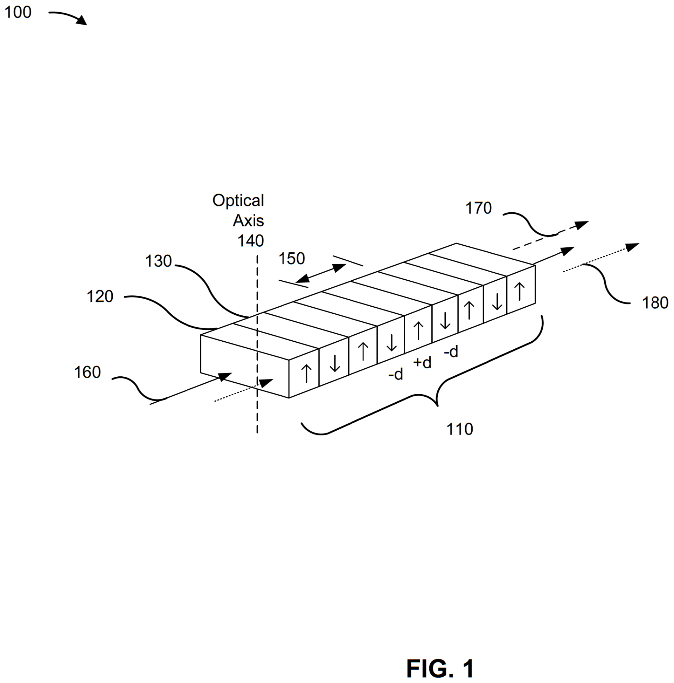

Fig. 1 is a diagram of an example implementation 100 associated with an octave-spanning single mode waveguide for non-linear optics. As shown in Fig. 1, the example implementation 100 includes a waveguide 110.

In some implementations, the waveguide 110 is a single mode optical fiber associated with conveying a beam. For example, the waveguide 110 may include an optical fiber that is associated with SPDC to generate entangled photons. The waveguide 110 may include a crystalline structure. For example, the waveguide 110 may include alternating crystalline directions, such as a first set of sections 120 associated with a first crystalline direction (e.g., up, as shown) and a second set of sections 130 with a second crystalline direction (down, as shown). In this example, the crystalline directions are orthogonal to a direction of propagation of a beam through the waveguide and along an optical axis 140. In some implementations, the alternating crystalline structure is associated with a configured period 150, Λ. Conditions for SPDC to occur in the waveguide 110 include an energy conservation condition represented by a first equation and a momentum conservation condition represented by a second equation: $\frac{1}{{λ}_{p}} = \frac{1}{{λ}_{i}} + \frac{1}{{λ}_{s}}$ $\frac{{n}_{p}}{{λ}_{p}} = \frac{{n}_{i}}{{λ}_{s}} + \frac{{n}_{s}}{{λ}_{s}} \pm \frac{1}{Λ}$ where λₚ represents a pump wavelength 160, λᵢ represents an idler wavelength 170, λₛ represents a signal wavelength 180, *nₚ* represents an index of refraction at the pump wavelength 160, *nᵢ* represents an index of refraction at the idler wavelength 170, and *nₛ* represents an index of refraction at the signal wavelength 180. In a physically curved waveguide (e.g., a waveguide that includes a ridge), to achieve signal-mode conditions through the waveguide 110, physical characteristics of the waveguide may be configured to satisfy an inequality of the form: $1 > \frac{d}{λ} \sqrt{\frac{2 {L}_{0} ϵ}{{R}_{0}}} > \frac{1}{2}$ where *d* represents a width of the ridge, *L₀* represents a height of the ridge, *R₀* represents a nominal radius of curvature (e.g., a bend along the *L₀* direction), λ represents a wavelength at which the waveguide is single mode, *ε* represents a function *ε* = *n*(λ)² where n represents an index of refraction of the waveguide. Accordingly, for the waveguide 110 to be single mode across an optical octave, the waveguide 110 satisfies inequalities of the forms: $1 > d \frac{{n}_{p}}{{λ}_{p}} \sqrt{\frac{2 {L}_{0}}{{R}_{0}}} > \frac{1}{2}$ $1 > d \frac{{n}_{i}}{{λ}_{i}} \sqrt{\frac{2 {L}_{0}}{{R}_{0}}} > \frac{1}{2}$ $1 > d \frac{{n}_{s}}{{λ}_{s}} \sqrt{\frac{2 {L}_{0}}{{R}_{0}}} > \frac{1}{2}$ where, for an optical octave in which SPDC occurs, 2λₚ = λᵢ = λₛ, which results in the inequalities simplifying to: $\frac{{n}_{p}}{{n}_{i , s}} < 1$ where *n_{i,s}* represents the refractive index of a material of the waveguide 110 at the idler wavelength and at the signal wavelength (which are the same wavelength). Accordingly, one example selection of a material for which the waveguide 110 can be manufactured is lithium niobate (LiNbO₃, sometimes referred to as "LN"). For example, an LN waveguide 110 can operate at pump wavelengths in a range of approximately 532 nanometers (nm) to 1870 nm. Accordingly, one example set of parameters may include geometric factors *d* = 50 micrometers (µm), *L₀ =* 25 µm, *R₀ =* 1 meter (m) and wavelengths *λₚ* = 780 nm and *λ*_{*i*,*s*} = 1560 nm. In this case, for *λₚ* = 780 nm, $\frac{d}{λ} \sqrt{2 {L}_{0} ϵ / {R}_{0}} = 0.987 < 1$, and for *λ_{i,s}* = 1560 nm, $\frac{d}{λ} \sqrt{2 {L}_{0} ϵ / {R}_{0}} = 0.501 > 0.5$.

As described in more detail below, the inequalities are based on a physical curvature being imparted to the waveguide 110. A result of the physical curvature is a height-dependent refractive index. However, as described in more detail below, the same height-dependent refractive index is achievable without physical curvature of the waveguide 110. For example, the height-dependent refractive index, which results in octave-spanning single mode performance, is achievable, for lithium niobate, by reverse proton exchange or titanium diffusion, as described in more detail below. In other words, some implementations described herein may include a waveguide 110 that has a height-dependent refractive index profile without a physical ridge being created. Although one example of the waveguide 110 is described in terms of lithium niobate, other materials may be used, for the same or other wavelengths. In some implementations, it is desirable for the geometric factors to be as close to 1 as possible for the pump wavelength 160, and as far from 0.5 as possible for the idler wavelength 170 and the signal wavelength 180. As described in more detail below, different physical structures may be possible for the waveguide 110.

As indicated above, Fig. 1 is provided as an example. Other examples may differ from what is described with regard to Fig. 1.

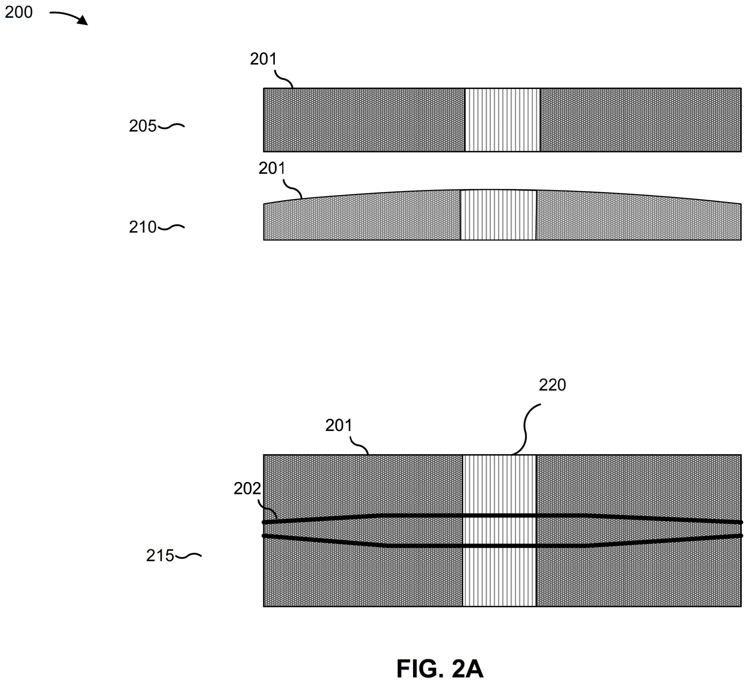

Figs. 2A-2D are diagrams of example implementations 200/240/270/280 associated with an octave-spanning single mode waveguide for non-linear optics.

As shown in Fig. 2A, a first example implementation 200 includes a creation of a physical ridge to achieve a height-dependent refractive index profile, a periodically polled lithium niobate (PPLN) waveguide 201. The PPLN waveguide is a nonlinear optical material, in which the crystalline direction of the lithium niobate material is periodically inverted (e.g., alternates directions) at a regular interval, as described above. Such a PPLN waveguide can be used for SPDC, as described above, or for second-harmonic generation (SHG), among other examples. In step 205, the PPLN waveguide 201 is manufactured with a configured period for the crystalline direction inversion. In step 210, the PPLN waveguide 201 is polished to achieve a configured radius of curvature *R₀*, such as a 1 m radius of curvature, as described above. In a step 215, an etching procedure is applied to achieve a ridge structure 202 with an adiabatic taper (e.g., a medial ridge), such as a curved ridge structure with a 25 µm ridge height *L₀* and a 50 µm ridge width *d.* The PPLN waveguide 110 may include 10 µm scale structures 220 etched into the lithium niobate material.

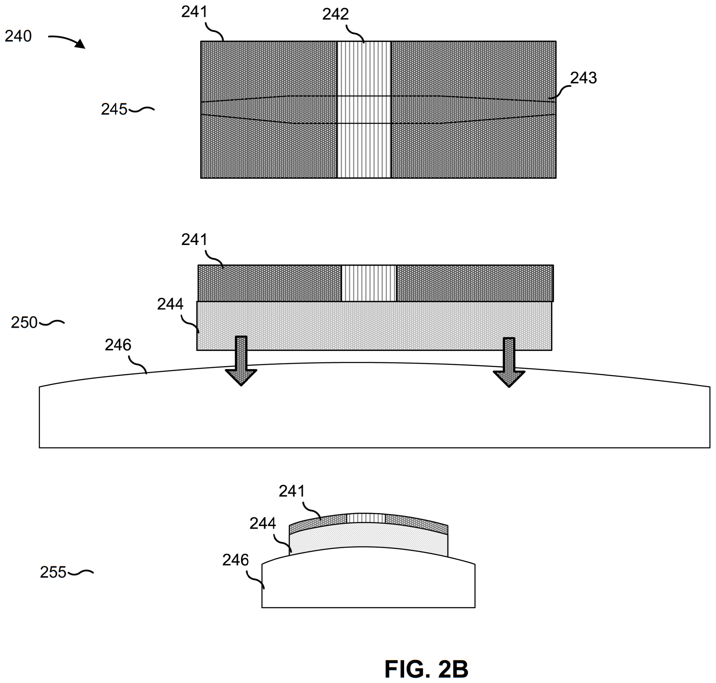

As shown in Fig. 2B, in a second example implementation 240 that includes a creation of a physical ridge to achieve a height-dependent refractive index profile, and in step 245, a PPLN waveguide 241 is provided with the 10 µm scale structures 242 etched thereon and the ridge structure 243 formed thereon. In step 250, the PPLN waveguide 241 is provided a substrate 244 (e.g., an insulator) and is attached to a curved surface 246. For example, the PPLN waveguide 241 and the substrate 244 may be oxide-bonded or optically contact-bonded to the curved surface 246. In step 255, a curvature of the curved surface 246 is imparted to the PPLN waveguide 241. This may result in a relatively tall structure attached to the PPLN waveguide 241 as well as stress-optical effects and physical stressing on the PPLN waveguide 241.

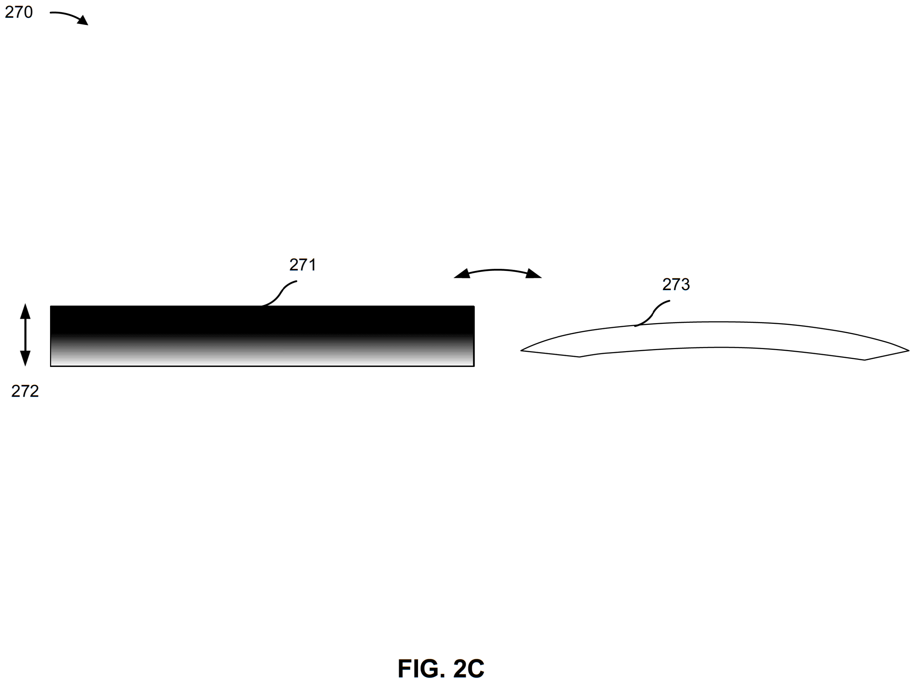

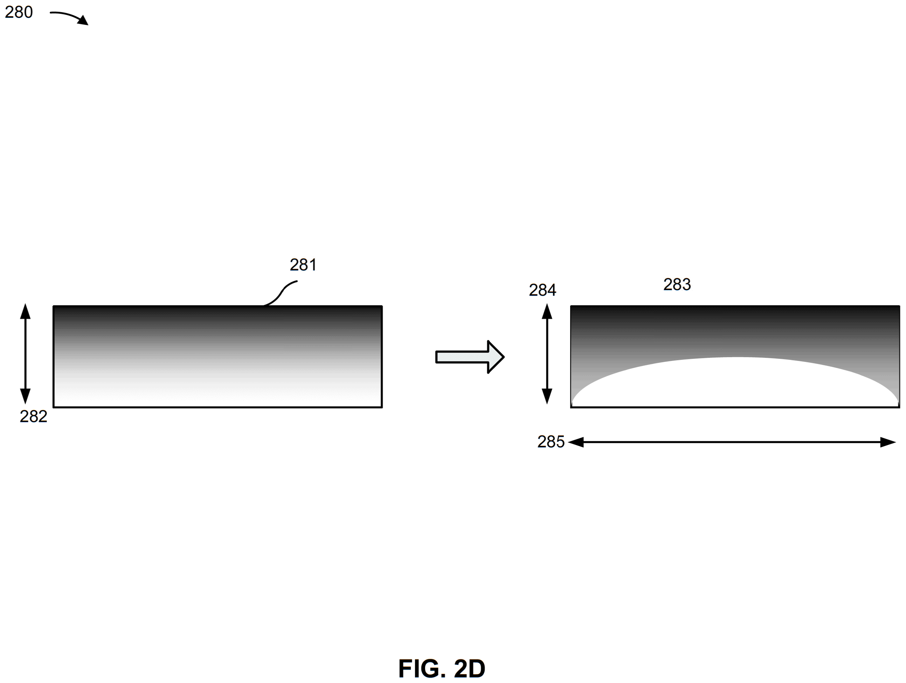

As shown in Fig. 2C, in a third example implementation 270, rather than a physical curvature being imparted to a waveguide, some implementations described herein may provide a pseudo-curvature. For example, the above-mentioned inequality $1 > \frac{d}{λ} \sqrt{\frac{2 {L}_{0} ϵ}{{R}_{0}}} > \frac{1}{2}$ is based on wave-guiding effects associated with physical curvature. However, the physical curvature is related to a height-dependent profile of a refractive index of the waveguide. In other words, creating the curved ridge structure in a waveguide alters the refractive index of a portion of the waveguide, resulting in a height-dependent refractive index profile. Here, rather than a physical curvature to achieve the height-dependent refractive index profile, some implementations described herein may achieve the height-dependent refractive index profile using one or more manufacturing steps that do not create a curvature. For example, in Fig. 2C, a PPLN waveguide 271 is manufactured with a gradient 272 of refractive index values, resulting in a height-dependent refractive index profile, similar to what is achieved from a curved waveguide 273, as shown. In another example implementation 280, in Fig. 2D, rather than a PPLN waveguide 281 with a refractive index profile that is a gradient 282 with respect to height, a PPLN waveguide 283 may be manufactured with a refractive index profile that is a gradient 284/285 with respect to both height and width. For example, refractive indexes of the PPLN waveguide 283 may have a curved gradient around an inner core of the PPLN waveguide 281, as shown, which may form a height-dependent refractive index profile similar to one achieved with a curved surface waveguide, as described above.

For a lithium niobate waveguide, a gradient of refractive index profiles can be achieved using reverse proton exchange (RPE) or titanium diffusion (Ti:LN), among other examples. In this way, a waveguide can be manufactured without additional processing steps associated with creating a physical ridge or curvature. For example, the waveguide can be manufactured for SPDC-based generation of quantum entangled photons, for second harmonic generators, or for optical parametric amplifiers, among other examples.

In reverse proton exchange, a manufacturing process may include a step of proton exchange, in which the lithium niobate waveguide is immersed in an acid (e.g., benzoic acid) to replace Li⁺ ions with H⁺ protons, which increases the refractive index of the lithium niobate waveguide in a gradient from a surface of the lithium niobate waveguide. Further, the lithium niobate waveguide is subjected to a reverse exchange step, in which the lithium niobate waveguide is exposed to a lithium-rich melt (e.g., a liquid-phase mixture), which replaces some H⁺ protons back with Li⁺ ions, thereby pushing a high-index region into the lithium niobate waveguide. In some implementations, an annealing step may be performed to improve optical quality affected by the proton exchange or reverse exchange steps. By controlling the reverse proton exchange procedure, a height-dependent refractive index profile that mirrors that of a curved waveguide is achieved.

In titanium diffusion, a thin titanium stripe is deposited on a surface of a lithium niobate waveguide and is heated in an oxygen rich environment. As a result, titanium diffuses into the lithium niobate waveguide, which increases a refractive index of regions of the lithium niobate waveguide that receive the diffused titanium. By controlling the titanium diffusion process, a height-dependent refractive index profile that mirrors that of a curved waveguide is achieved. Although some implementations are described herein in terms of reverse proton exchange and titanium diffusion, other doping steps may be used for lithium niobate or other waveguide materials.

As indicated above, Figs. 2A-2C are provided as an example. Other examples may differ from what is described with regard to Figs. 2A-2C.

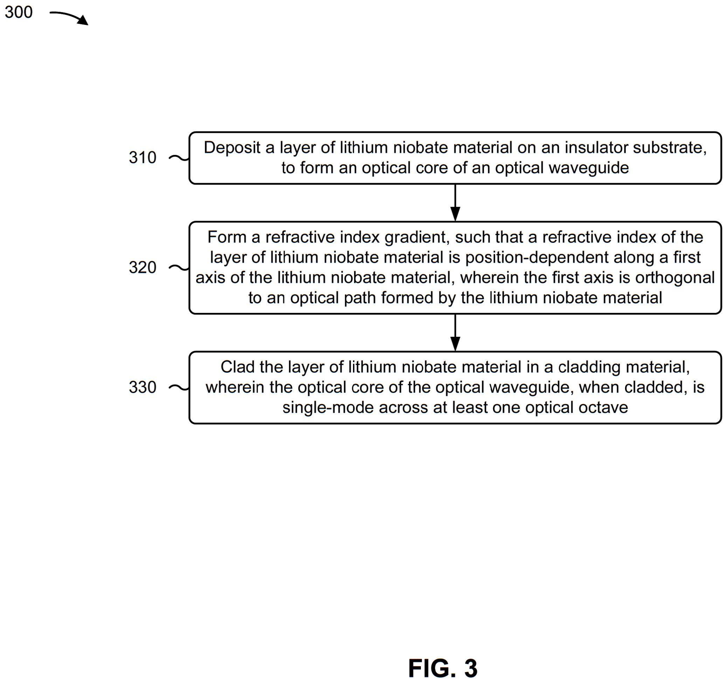

Fig. 3 is a flowchart of an example process 300 associated with manufacturing an octave-spanning single mode waveguide for non-linear optics. One or more process blocks of Fig. 3 are performed by a device (e.g., a manufacturing device) and/or by another device or a group of devices separate from or including the device.

As shown in Fig. 3, process 300 includes depositing a layer of lithium niobate material on an insulator substrate, to form an optical core of an optical waveguide (block 310). For example, the device may deposit a layer of lithium niobate material on an insulator substrate, to form an optical core of an optical waveguide, as described above.

As further shown in Fig. 3, process 300 includes forming a refractive index gradient, such that a refractive index of the layer of lithium niobate material is position-dependent along a first axis of the lithium niobate material, wherein the first axis is orthogonal to an optical path formed by the lithium niobate material (block 320). For example, the device may form a refractive index gradient, such that a refractive index of the layer of lithium niobate material is position-dependent along a first axis of the lithium niobate material, wherein the first axis is orthogonal to an optical path formed by the lithium niobate material, as described above.

In some implementations, the refractive index gradient is formed using a physical curvature. For example, a curved ridge structure may be formed on the waveguide, such as using polishing or etching. Additionally, or alternatively, the waveguide may be bonded to a curved surface (e.g., a curved substrate) to stress the waveguide to a bent shape.

In some implementations, the refractive index gradient is formed using a doping procedure. For example, the waveguide may be subjected to reverse proton exchange or titanium diffusion, among other examples, to form a height-dependent refractive index gradient. In this case, the waveguide is subjected to a doping material, which is introduced into a core material of the waveguide to alter a refractive index of portions of the core material of the waveguide.

In some implementations, to ensure formation of the refractive index gradient, the reverse proton exchange process begins with immersing the lithium niobate waveguide in a material (e.g., benzoic acid) at a configured temperature range of (e.g., 180 degrees Celsius (°C) to 220 °C) for a configured duration (e.g., 10 hours to 20 hours). This step replaces Li⁺ ions with H⁺ protons, creating a surface-high refractive index gradient. Following this, a reverse exchange is performed by immersing the waveguide in a lithium-rich melt (e.g., a 70% lithium nitrate and 30% potassium nitrate liquid state solution) at a configured temperature (e.g., 300 °C to 350 °C) for a configured time (e.g., 12 hours to 24 hours). The reverse exchange pushes the high-index region into the waveguide material. An annealing process may then be applied, heating the waveguide to a configured temperature (e.g., 400 °C to 450 °C) for a configured time (e.g., 4 hours to 8 hours) to stabilize the optical properties post-exchange.

In some implementations, to ensure formation of the refractive index gradient, a titanium stripe of a configured thickness (e.g., 10 nm) is deposited on a waveguide surface using a deposition technique (e.g., sputtering). This is followed by heating in an oxygen-rich environment at a configured temperature range (e.g., 800 °C to 1000 °C) for a configured period of time (e.g., 24 hours to 48 hours). The diffusion increases the refractive index in the regions where titanium has penetrated, achieving a configured gradient. Proper control of the conditions ensures that the refractive index profile mirrors that of a physically curved waveguide, facilitating single mode performance across the optical octave.

As further shown in Fig. 3, process 300 includes cladding the layer of lithium niobate material in a cladding material, wherein the optical core of the optical waveguide, when cladded, is single mode across at least one optical octave (block 330). For example, the device may clad the layer of lithium niobate material in a cladding material, wherein the optical core of the optical waveguide, when cladded, is single mode across at least one optical octave, as described above. The cladding is added around the lithium niobate core to cause light to propagate through the lithium niobate core without leaking and without other light entering the lithium niobate core. Additionally, or alternatively, the cladding may provide protection to the lithium niobate core.

Process 300 may include additional aspects, such as any single aspect or any combination of aspects described below and/or in connection with one or more other processes described elsewhere herein.

In a first aspect, forming the refractive index gradient comprises etching a set of ridge structures in the layer of lithium niobate material, polishing a curved surface on a side of the layer of lithium niobate material, and forming an adiabatic taper in the layer of lithium niobate material.

In a second aspect, alone or in combination with the first aspect, forming the refractive index gradient comprises etching a set of ridge structures in the layer of lithium niobate material, forming an adiabatic taper in the layer of lithium niobate material, and attaching the insulator substrate to a curved surface, wherein the curved surface stresses the layer of lithium niobate material to induce a curve in a surface of the layer of lithium niobate material.

In a third aspect, alone or in combination with one or more of the first and second aspects, forming the refractive index gradient comprises performing a reverse proton exchange procedure to create the refractive index gradient.

In a fourth aspect, alone or in combination with one or more of the first through third aspects, forming the refractive index gradient comprises performing a titanium diffusion procedure to create the refractive index gradient.

Further examples are set out in the clauses below:
1. An optical waveguide, comprising:
   a single mode optical fiber, comprising:
   a core having a core material with a position-dependent refractive index,
   wherein the core material is disposed such that a crystalline direction of the core material alternates along an optical path of the single mode optical fiber and such that the position-dependent refractive index has a gradient orthogonal to the optical path of the single mode optical fiber,
   wherein the single mode optical fiber is single mode across at least one optical octave, and
   a cladding having a different refractive index than the core material
2. The optical waveguide of clause 1, wherein the core material is lithium niobate.
3. The optical waveguide of clause 1 or 2, wherein the core material is associated with an etched or polished curved ridge structure.
4. The optical waveguide of clause 3, wherein the curved ridge structure includes a set of structures at an approximately 10 micrometer scale.
5. The optical waveguide of clause 3, wherein the curved ridge structure is approximately 25 micrometers tall by 50 micrometers wide.
6. The optical waveguide of any one of clauses 3-5, wherein the curved ridge structure is associated with an adiabatic taper.
7. The optical waveguide of any one of the preceding clauses, wherein the core material is associated with a bent, curved ridge structure.
8. The optical waveguide of clause 7, wherein the core material is bonded to a curved substrate.
9. The optical waveguide of any one of the preceding clauses, wherein the core material is associated with a doping material.
10. The optical waveguide of clause 9, wherein the position-dependent refractive index is a height-dependent refractive index associated with the doping material.
11. The optical waveguide of clause 9, wherein the position-dependent refractive index is based on a reverse proton exchange with the core material.
12. The optical waveguide of clause 9, wherein the position-dependent refractive index is based on a titanium diffusion with the core material.
13. A method, comprising:
   depositing, by a device, a layer of lithium niobate material on an insulator substrate, to form an optical core of an optical waveguide;
   forming, by the device, a refractive index gradient, such that a refractive index of the layer of lithium niobate material is position-dependent along a first axis of the lithium niobate
   material, wherein the first axis is orthogonal to an optical path formed by the lithium niobate material; and
   cladding the layer of lithium niobate material in a cladding material, wherein the optical core of the optical waveguide, when cladded, is single mode across at least one optical octave.
14. The method of clause 13, wherein forming the refractive index gradient comprises:
   etching a set of ridge structures in the layer of lithium niobate material;
   polishing a curved surface on a side of the layer of lithium niobate material; and
   forming an adiabatic taper in the layer of lithium niobate material.
15. The method of clause 13, wherein forming the refractive index gradient comprises:
   etching a set of ridge structures in the layer of lithium niobate material;
   forming an adiabatic taper in the layer of lithium niobate material; and
   attaching the insulator substrate to a curved surface, wherein the curved surface stresses the layer of lithium niobate material to induce a curve in a surface of the layer of lithium niobate material.
16. The method of clause 13, wherein forming the refractive index gradient comprises:
   performing a reverse proton exchange procedure to create the refractive index gradient.
17. The method of clause 13, wherein forming the refractive index gradient comprises:
   performing a titanium diffusion procedure to create the refractive index gradient.
18. An optical system, comprising:
   a non-linear optic to receive an input beam with a pump wavelength and emit an output beam with a set of photons at a signal/idler wavelength and with a remaining beam portion at the pump wavelength,
   wherein the signal/idler wavelength is twice the pump wavelength; and
   at least one single mode optical fiber, comprising:
      a core having a core material with a position-dependent refractive index,
      wherein the core material is disposed such that a crystalline direction of the core material alternates along an optical path of the single mode optical fiber and such that the position-dependent refractive index has a gradient orthogonal to the optical path of the single mode optical fiber, and
      wherein the at least one single mode optical fiber maintains a single mode characteristic at the pump wavelength and the signal/idler wavelength.
19. The optical system of clause 18, further comprising:
   an optical emitter to provide the input beam with the pump wavelength to the non-linear optic.
20. The optical system of clause 18 or 19, wherein the at least one single mode optical fiber includes a medial ridge.

Although Fig. 3 shows example blocks of process 300, in some implementations, process 300 includes additional blocks, fewer blocks, different blocks, or differently arranged blocks than those depicted in Fig. 3. Additionally, or alternatively, two or more of the blocks of process 300 may be performed in parallel.

The foregoing disclosure provides illustration and description, but is not intended to be exhaustive or to limit the implementations described herein to the precise forms that are described. Modifications and variations can be made in light of the above description or may be acquired from practice of the implementations described herein.

It will be apparent that systems and/or methods described herein can be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

## Claims

1. An optical waveguide, comprising:
a single mode optical fiber, comprising:
a core having a core material with a position-dependent refractive index,
wherein the core material is disposed such that a crystalline direction of the core material alternates along an optical path of the single mode optical fiber and such that the position-dependent refractive index has a gradient orthogonal to the optical path of the single mode optical fiber,
wherein the single mode optical fiber is single mode across at least one optical octave, and
a cladding having a different refractive index than the core material.

2. The optical waveguide of claim 1, wherein the core material is lithium niobate.

3. The optical waveguide of claim 1 or 2, wherein the core material is associated with an etched or polished curved ridge structure.

4. The optical waveguide of claim 3, wherein the curved ridge structure includes a set of structures at an approximately 10 micrometer scale.

5. The optical waveguide of claim 3, wherein the curved ridge structure is approximately 25 micrometers tall by 50 micrometers wide.

6. The optical waveguide of claim 3, wherein the curved ridge structure is associated with an adiabatic taper.

7. The optical waveguide of any one of the preceding claims, wherein the core material is associated with a bent, curved ridge structure.

8. The optical waveguide of claim 7, wherein the core material is bonded to a curved substrate.

9. The optical waveguide of any one of the preceding claims, wherein the core material is associated with a doping material.

10. The optical waveguide of claim 9, wherein the position-dependent refractive index is a height-dependent refractive index associated with the doping material; or optionally
wherein the position-dependent refractive index is based on a reverse proton exchange with the core material; or optionally
wherein the position-dependent refractive index is based on a titanium diffusion with the core material.

11. A method, comprising:
depositing, by a device, a layer of lithium niobate material on an insulator substrate, to form an optical core of an optical waveguide;
forming, by the device, a refractive index gradient, such that a refractive index of the layer of lithium niobate material is position-dependent along a first axis of the lithium niobate material, wherein the first axis is orthogonal to an optical path formed by the lithium niobate material; and
cladding the layer of lithium niobate material in a cladding material, wherein the optical core of the optical waveguide, when cladded, is single mode across at least one optical octave.

12. The method of claim 11, wherein forming the refractive index gradient comprises:
etching a set of ridge structures in the layer of lithium niobate material;
polishing a curved surface on a side of the layer of lithium niobate material; and
forming an adiabatic taper in the layer of lithium niobate material; or optionally
wherein forming the refractive index gradient comprises:
etching a set of ridge structures in the layer of lithium niobate material;
forming an adiabatic taper in the layer of lithium niobate material; and
attaching the insulator substrate to a curved surface, wherein the curved surface stresses the layer of lithium niobate material to induce a curve in a surface of the layer of lithium niobate material; or optionally
wherein forming the refractive index gradient comprises:
performing a reverse proton exchange procedure to create the refractive index gradient.

13. The method of claim 12, wherein forming the refractive index gradient comprises:
performing a titanium diffusion procedure to create the refractive index gradient.

14. An optical system, comprising:
a non-linear optic to receive an input beam with a pump wavelength and emit an output beam with a set of photons at a signal/idler wavelength and with a remaining beam portion at the pump wavelength,
wherein the signal/idler wavelength is twice the pump wavelength; and at least one single mode optical fiber, comprising:
a core having a core material with a position-dependent refractive index,
wherein the core material is disposed such that a crystalline direction of the core material alternates along an optical path of the single mode optical fiber and such that the position-dependent refractive index has a gradient orthogonal to the optical path of the single mode optical fiber, and
wherein the at least one single mode optical fiber maintains a single mode characteristic at the pump wavelength and the signal/idler wavelength.

15. The optical system of claim 14, further comprising:
an optical emitter to provide the input beam with the pump wavelength to the non-linear optic; or optionally
wherein the at least one single mode optical fiber includes a medial ridge.
